# EUROPEAN PATENT APPLICATION

(11) **EP 4 755 672 A1**
(43) Date of publication of application: **10.06.2026**
(21) Application number: 24847784.6
(22) Date of filing: 11.06.2024
(51) Int. Cl.: B60H 1/00

(54) **THERMAL MANAGEMENT SYSTEM FOR VEHICLE AND VEHICLE**

(30) Priority: 31.07.2023 CN 202322042573 U
(71) Applicant: BYD Company Limited, Shenzhen, Guangdong 518118 (CN)
(72) Inventor: GAO, Shanling, Shenzhen, Guangdong 518118 (CN); ZHANG, Jingke, Shenzhen, Guangdong 518118 (CN); CAI, Chuanming, Shenzhen, Guangdong 518118 (CN); PENG, Wensheng, Shenzhen, Guangdong 518118 (CN); DING, Yinhui, Shenzhen, Guangdong 518118 (CN)
(74) Representative: Mathys & Squire
(86) International application number: PCT/CN2024/098385
(87) International publication number: WO 2025/025821

(57) **Abstract**

A thermal management system (100) for a vehicle is provided. The vehicle (1000) is provided with a storage box (200). The thermal management system (100) includes: an air conditioning subsystem (300) and a heat exchange assembly (4). The air conditioning subsystem (300) includes a compressor (1). The heat exchange assembly (4) is adapted to regulate a temperature in the storage box (200), the heat exchange assembly (4) includes an energy storage member (41) and a first refrigerant branch (45), the first refrigerant branch (45) supplies energy to the energy storage member (41), the energy storage member (41) is configured to store and release energy and is adapted to regulate the temperature in the storage box (200), and the first refrigerant branch (45) is respectively connected to an air inlet (12) and an air outlet (11) of the compressor (1).

## Description

### CROSS-REFERENCE TO RELATED APPLICATIONS

This application is based on Chinese Patent Application No. 2023220425738, filed on July 31, 2023, and claims priority to the foregoing Chinese Patent Application, which is incorporated herein by reference in its entirety

### TECHNICAL FIELD

This application relates to the technical field of thermal management systems for vehicles, and in particular, to a thermal management system for a vehicle, and a vehicle.

### BACKGROUND

In the related art, a vehicle-mounted refrigerator is a system independent of an original thermal management system of a vehicle. Due to the large number of parts and the large structural size, there is a high demand for layout space in the vehicle. In particular, when a storage box is experiencing temperature retention, a compressor in a heat exchange assembly requires frequent start-up, increasing energy consumption of the vehicle and reducing the driving range of the vehicle.

### SUMMARY OF THE INVENTION

This application is intended to solve one of the technical problems in the related art at least to some extent.

To this end, an objective of this application is to provide a thermal management system for a vehicle, which can reuse an air conditioning compressor, and is provided with an energy storage member, so that the air conditioning compressor does not need frequent start-up, which is beneficial to reducing energy consumption of the vehicle and improving driving range of the vehicle.

In a thermal management system for a vehicle according to an embodiment of this application, the vehicle is provided with a storage box, and the thermal management system includes: an air conditioning subsystem, wherein the air conditioning subsystem includes a compressor; and a heat exchange assembly, wherein the heat exchange assembly is adapted to regulate a temperature in the storage box, the heat exchange assembly including an energy storage member and a first refrigerant branch, the first refrigerant branch supplying energy to the energy storage member, the energy storage member being configured to store and release energy and being adapted to regulate the temperature in the storage box, and the first refrigerant branch being respectively connected to an air inlet and an air outlet of the compressor.

In the thermal management system of a vehicle according to the embodiment of this application, the heat exchange assembly is provided and the first refrigerant branch of the heat exchange assembly is respectively connected to the air inlet and the air outlet of the compressor. In this way, the first refrigerant branch can be integrated into the original thermal management system of the vehicle, so that the temperature of the storage box can be controlled directly by using the original thermal management system, and therefore, there is no need to separately provide a temperature regulation structure, such as a compressor, for the storage box, thereby reducing the quantity of parts, reducing structural size, and lowering demand for layout space in the vehicle. In addition, the energy storage member can recover and store energy of the first refrigerant branch, so that when the compressor is not operating, the energy stored in the energy storage member can be used to implement temperature retention of the storage box, and therefore the compressor does not need frequently start-up, which is beneficial to reducing energy consumption of the vehicle and improving the driving range of the vehicle.

In the thermal management system for a vehicle according to some embodiments of this application, the first refrigerant branch regulates the temperature in the storage box, or the energy storage member releases energy to regulate the temperature in the storage box.

In the thermal management system of a vehicle according to some embodiments of this application, the heat exchange assembly further includes a first heat exchanger, and the first heat exchanger is connected to the first refrigerant branch in series.

In the thermal management system of a vehicle according to some embodiments of this application, the first refrigerant branch passes through the energy storage member.

In the thermal management system of a vehicle according to some embodiments of this application, the air conditioning subsystem includes a first branch for regulating a temperature in a compartment, and the first branch and the first refrigerant branch are connected in parallel.

In the thermal management system of a vehicle according to some embodiments of this application, the air conditioning subsystem includes a first branch for regulating a temperature in a compartment, and the first branch and the first refrigerant branch are connected in series.

The thermal management system of a vehicle according to some embodiments of this application further includes a sterilization module for sterilizing the heat exchange assembly.

In the thermal management system of a vehicle according to some embodiments of this application, the energy storage member is configured as a phase-change material member.

The thermal management system of a vehicle according to some embodiments of this application further includes a first heat exchange member for exchanging heat with a battery pack, and the first heat exchange member and the heat exchange assembly are connected in parallel.

In the thermal management system of a vehicle according to some embodiments of this application, there are a plurality of first heat exchange members, and the plurality of first heat exchange members are connected in parallel.

This application further provides a vehicle, including the thermal management system according to any one of the foregoing embodiments.

Compared with a conventional technology, the vehicle and the foregoing thermal management system have the same advantages, which will not be described herein again.

Additional aspects and advantages of this application are set forth in part in the following description, and in part become apparent from the following description, or may be learned through the practice of this application.

### BRIEF DESCRIPTION OF DRAWINGS

FIG. 1 is a diagram of a thermal management system according to some embodiments of this application;
FIG. 2 is a diagram of a heat exchange assembly and a storage box of the thermal management system shown in FIG. 1;
FIG. 3 is a diagram of a battery thermal management module of the thermal management system shown in FIG. 1;
FIG. 4 is a diagram of a motor and electric control coolant circuit of the thermal management system shown in FIG. 1;
FIG. 5 is a diagram of the thermal management system shown in FIG. 1 when it is in a refrigeration retention mode;
FIG. 6 is a diagram of the thermal management system shown in FIG. 1 when it is in a heating retention mode;
FIG. 7 is a diagram of the thermal management system shown in FIG. 1 when an occupant compartment is refrigerating;
FIG. 8 is a diagram of the thermal management system shown in FIG. 1 when an occupant compartment is heating (in a heating mode);
FIG. 9 is a diagram of the thermal management system shown in FIG. 1 when it is in a battery-only cooling mode;
FIG. 10 is a diagram of the thermal management system shown in FIG. 1 when it is in a battery-only heating mode; and
FIG. 11 is a diagram of a vehicle according to some embodiments of this application.

### Reference numerals:

1000: vehicle;
100: thermal management system, 200: storage box, 201: air vent;
300: air conditioning subsystem, 301: first branch, 302: refrigerant circulation circuit;
1: compressor, 11: air outlet, 12: air inlet, 13: high-pressure sensor, 14: temperature sensor, 15: solenoid valve, 16: pressure and temperature sensor, 17: check valve, 18: electronic expansion valve, 19: liquid storage and drying tank, 20: air PTC thermistor;
21: first condenser, 22: heat pump plate type heat exchanger;
30: second heat exchanger, 31: first indoor heat exchanger, 32: second indoor heat exchanger;
4: heat exchange assembly, 41: energy storage member, 42: first heat exchanger, 43: sterilization module, 44: fan, 45: first refrigerant branch;
51: first throttle element, 52: on-off valve, 53: third throttle element;
61: first control valve, 62: second control valve, 7: air-liquid separator;
8a: battery thermal management module, 8: first heat exchange member, 81: large-diameter throttle valve;
9a: motor and electric control coolant circuit, 91: motor and electric control unit, 92: water pump, 93: water temperature sensor, 94: four-way water valve, valve port a, valve port b, valve port c, valve port d, 95: radiator, 96: electronic fan, 97: coolant tank.

### DESCRIPTION OF EMBODIMENTS

Embodiments of this application are described in detail below, examples of which are shown in the accompanying drawings, where same or similar reference numerals throughout represent same or similar elements or elements having same or similar functions. The embodiments described below with reference to the accompanying drawings are exemplary and are intended to explain this application, and shall not be construed as a limitation on this application.

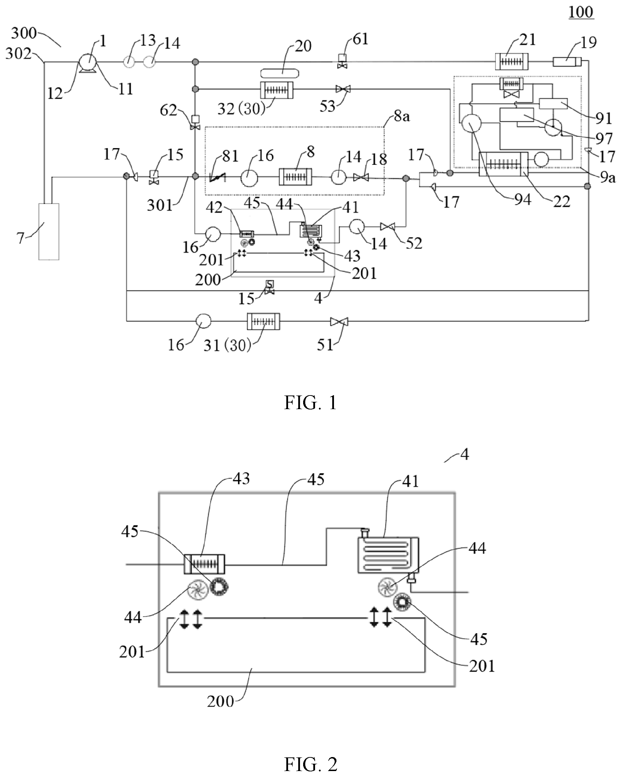

A thermal management system 100 for a vehicle according to an embodiment of this application is described below with reference to FIG. 1 to FIG. 11.

In a thermal management system 100 for a vehicle according to the embodiment of this application, the vehicle 1000 is provided with a storage box 200, and the thermal management system 100 includes: an air conditioning subsystem 300 and a heat exchange assembly 4.

The air conditioning subsystem 300 includes a compressor 1. The heat exchange assembly 4 is adapted to regulate temperature in the storage box 200. The heat exchange assembly 4 includes an energy storage member 41 and a first refrigerant branch 45. The first refrigerant branch 45 supplies energy to the energy storage member 41. The energy storage member 41 is configured to store and release energy and is adapted to regulate the temperature in the storage box 200. The first refrigerant branch 45 is respectively connected to an air inlet 12 and an air outlet 11 of the compressor 1.

Therefore, the first refrigerant branch 45 can be integrated into an original thermal management system 100 of the vehicle 1000, to reuse the air conditioning compressor 1, so that the temperature of the storage box 200 can be controlled directly by using the original thermal management system 100, and there is no need to independently provide a temperature regulation structure, such as a compressor, for the storage box 200, thereby reducing the quantity of parts, reducing a structural size, and lowering a demand for layout space of the vehicle. In addition, the first refrigerant branch 45 supplies energy to the energy storage member 41, and the energy storage member 41 can recover and store cold of the first refrigerant branch 45, so that when the compressor 1 is not operating, the energy stored in the energy storage member 41 can be used to implement temperature retention of the storage box 200, and therefore frequent start-up of the compressor 1 can be reduced, which is beneficial to reducing energy consumption of the vehicle and improving the driving range of the vehicle.

For example: the vehicle 1000 is provided with the storage box 200 and the thermal management system 100. It should be noted that the storage box 200 may be configured as a storage box 200 of a vehicle-mounted refrigerator (that is, a refrigerator system in the vehicle). The storage box 200 is configured to store food, drinks, and the like, and the temperature in the storage box 200 is regulated by the heat exchange assembly 4, to preserve freshness of the food in the storage box 200.

For example, the thermal management system 100 includes: the air conditioning subsystem 300 and the heat exchange assembly 4. The air conditioning subsystem 300 includes the compressor 1. The compressor 1 is disposed in a refrigerant circulation circuit 302. A first condenser 21, a first indoor heat exchanger 31, and the heat exchange assembly 4 are further disposed in the refrigerant circulation circuit 302.

For example, as shown in FIG. 1, the compressor 1 is provided with the air outlet 11 and the air inlet 12. A first end of the first condenser 21 is connected to the air outlet 11. One end of the first indoor heat exchanger 31 is connected to a second end of the first condenser 21 via a first throttle element 51. The other end of the first indoor heat exchanger 31 is connected to the air inlet 12. The heat exchange assembly 4 is adapted to regulate the temperature in the storage box 200. The heat exchange assembly 4 includes the energy storage member 41 and the first refrigerant branch 45. The first refrigerant branch 45 is respectively connected to the air inlet 12 and the air outlet 11 of the compressor 1, so that refrigerant discharged from the air outlet 11 of the compressor 1 can flow through the first refrigerant branch 45, to regulate the temperature of the storage box 200. In addition, the energy storage member 41 is configured to store energy and is adapted to regulate the temperature in the storage box 200. The first refrigerant branch 45 exchanges heat with the energy storage member 41, so that the first refrigerant branch 45 supplies energy to the energy storage member 41.

The first condenser 21 may be configured as an outdoor condenser. The first indoor heat exchanger 31 may be configured as an evaporator. Both the first throttle element 51 and the on-off valve 52 are configured as bidirectional electronic expansion valves 18.

For example, the compressor 1 is configured as a heat pump electric compressor. Compared to a common electric compressor, the heat pump electric compressor enhances durability to meet life service requirements of the system. The first indoor heat exchanger 31 can be configured to exchange heat with the occupant compartment, the motor, or the battery in the vehicle. Preferably, the first indoor heat exchanger 31 can be configured to exchange heat with the occupant compartment in the vehicle.

In actual use, the compressor 1 discharges refrigerant through the air outlet 11. The refrigerant sequentially passes through the first condenser 21, the first throttle element 51, and the first indoor heat exchanger 31, and returns to the compressor 1 through the air inlet 12. In this case, the first indoor heat exchanger 31 exchanges heat with the occupant compartment in the door. In this way, the air conditioning subsystem 300 can heat or refrigerate the occupant compartment in the vehicle, that is, the temperature in the compartment can be regulated.

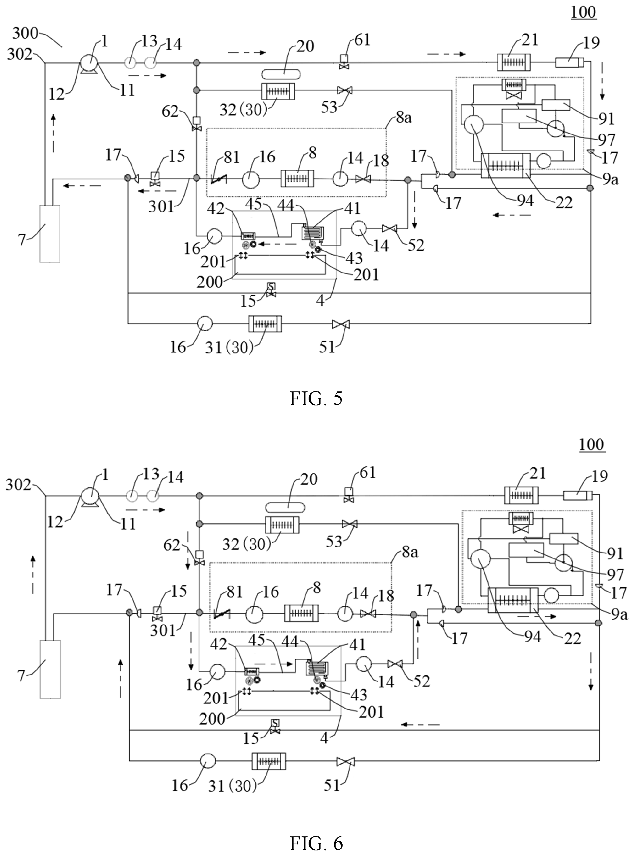

Further, as shown in FIG. 5, the heat exchange assembly 4 includes an energy storage member 41and a first refrigerant branch 45. The first refrigerant branch 45 exchanges heat with the energy storage member 41. The first refrigerant branch is respectively connected to the air inlet 12 and the air outlet 11 of the compressor 1, so that the first refrigerant branch 45 and the first branch 301 can share the compressor 1.

For example, as shown in FIG. 1, the heat exchange assembly 4 is disposed outside the storage box 200 to reduce the occupancy of space in the storage box 200, and the heat exchange assembly 4 further includes a fan 44. The fan 44 is disposed corresponding to the air vent 201 of the storage box 200. The fan 44 rotates to blow heat or cold of the heat exchange assembly 4 into the storage box 200 through the air vent 201, thereby controlling the temperature in the storage box 200. Alternatively, the heat exchange assembly 4 may be directly disposed in the storage box 200, which is not limited herein.

Therefore, while the air conditioning subsystem 300 regulates the temperature in the compartment, the refrigerant discharged from the compressor 1 can flow to the first refrigerant branch 45 to heat or cool the storage box 200, that is, to regulate the temperature of the storage box 200. In addition, the energy storage member 41 can exchange heat with the first refrigerant branch 45 to store energy. In this way, when the air conditioning subsystem 300 is not operating (that is, the compressor 1 is not operating), temperature retention of the storage box 200 is implemented by using the energy of the energy storage member 41. Temperature retention includes refrigeration retention, heating retention, and the like, which is not limited herein.

In addition, the energy storage member 41 can store cold of the first refrigerant branch 45, and is configured to regulate the temperature in the storage box 200 when the compressor 1 is not operating, to implement temperature retention of the food in the storage box 200. That is, the energy storage member 41 can recycle the cold of the first refrigerant branch 45, to reduce energy waste.

For example, the energy storage member 41 may be configured as a phase-change material, and a refrigerant evaporator may be installed in the energy storage member 41. The first refrigerant branch 45 is disposed in the refrigerant evaporator. The phase-change material can absorb energy of the low-temperature refrigerant flowing through the refrigerant evaporator, and stores the energy, to implement energy recovery of the first refrigerant branch 45 by the energy storage member 41.

Certainly, the energy storage member 41 may alternatively be configured as other type of energy storage structure, which is not limited herein.

In this way, energy recovery of the first refrigerant branch 45 can be implemented by using the energy storage member 41, thereby reducing the energy consumption of the vehicle and improving the driving range of the vehicle.

It should be noted that in the related art, a heat exchange assembly 4 of a storage box 200 of a vehicle-mounted refrigerator needs a set of heat exchange assembly 4 independent of an air conditioning subsystem 300. That is, the heat exchange assembly 4 is not connected to the air conditioning subsystem 300, and the heat exchange assembly 4 requires a continuous power supply to retain the temperature of the storage box 200.

However, in this application, through the arrangement of the energy storage member 41, the storage box 200 can be refrigerated directly by using the original thermal management system 100 of the vehicle 1000, and the energy storage member 41 can implement energy recovery and utilization of the first refrigerant branch 45, thereby reducing the energy consumption of the vehicle and improving the driving range of the vehicle.

According to the thermal management system 100 for the vehicle in the embodiment of this application, through the arrangement of the energy storage member 41 and communication between the first refrigerant branch 45 and the first branch 301, the first refrigerant branch 45 is integrated into the original thermal management system 100 of the vehicle 1000, so that the temperature of the storage box 200 can be controlled directly by using the original thermal management system 100, and there is no need to separately provide a temperature regulation structure, such as a compressor 1, for the storage box 200, thereby reducing the quantity of parts, reducing the structural size, and lowering the demand for layout space in the vehicle. In addition, the energy storage member 41 can recover and store energy of the first refrigerant branch 45, so that when the compressor 1 is not operating, the energy stored in the energy storage member 41 can be used to implement temperature retention of the storage box 200, and then the compressor 1 does not need frequent start-up, which is beneficial to reducing the energy consumption of the vehicle and improving the driving range of the vehicle.

In some embodiments, the first refrigerant branch 45 regulates the temperature in the storage box 200, or the energy storage member 41 releases energy to regulate the temperature in the storage box 200.

For example, the first refrigerant branch 45 adjusts the temperature in the storage box 200. In this case, the heat exchange assembly 4 may be in the first temperature regulation mode. The first refrigerant branch 45 is respectively connected to the air inlet 12 and the air outlet 11 of the compressor 1, so that the first refrigerant branch 45 and the first branch 301 can share the compressor 1. In addition, the first refrigerant branch 45 can supply energy to the energy storage member 41, so that the energy storage member 41 can store energy.

In this way, the temperature of the storage box 200 can be regulated by the first refrigerant branch 45, so that the first refrigerant branch 45 can be integrated into the original thermal management system 100 of the vehicle 1000, the storage box 200 can be refrigerated directly by using the original thermal management system 100, and there is no need to separately provide the temperature regulation structure, such as the compressor 1, for the storage box 200, thereby reducing the quantity of parts, reducing the structural size, and lowering the demand for layout space of the vehicle.

When the energy storage member 41 releases energy to regulate the temperature in the storage box 200, the heat exchange assembly 4 may be in a second temperature regulation mode. In this case, the energy storage member 41 releases energy (cold or heat) to regulate the temperature in the storage box 200. In this way, the energy storage member 41 can use the energy stored in the energy storage member 41 to implement temperature retention of the storage box 200 when the compressor 1 is not operating, thereby reducing frequent start-up of the compressor 1, reducing the energy consumption of the vehicle, and improving the driving range of the vehicle.

It should be noted that when the heat exchange assembly 4 is in the second temperature regulation mode, the heat exchange assembly 4 may have a refrigeration retention mode and a heating retention mode.

For example, in the refrigeration retention mode, a first end of the first refrigerant branch 45 is connected to a second end of the first condenser 21 via the on-off valve 52, and a second end of the first refrigerant branch 45 communicates with the air inlet 12.

In this way, the compressor 1, the first condenser 21, and the heat exchange assembly 4 form a circuit. In this case, the compressor 1 discharges the refrigerant through the air outlet 11, and the refrigerant sequentially passes through the first condenser 21, the on-off valve 52, and the first refrigerant branch 45, and returns to the compressor 1 through the air inlet 12. In this case, the temperature of the refrigerant passing through the first condenser 21 is relatively low, and the first refrigerant branch 45 exchanges heat with the energy storage member 41, so that the energy storage member 41 obtains the cold of the first refrigerant branch 45 and implements refrigeration in the storage box 200, thereby preserving the freshness of the food.

Both the first throttle element 51 and the on-off valve 52 may be configured as solenoid valves 15, to ensure that flow of the refrigerant in the flow path can be controlled.

Therefore, the first refrigerant branch 45 can be integrated into the original thermal management system 100 of the vehicle 1000, that is, the heat exchange assembly 4 is integrated into the original thermal management system 100 of the vehicle 1000, so that the storage box 200 can be refrigerated directly by using the original thermal management system 100, and there is no need to separately provide a temperature regulation structure, such as a compressor 1, for the storage box 200, thereby reducing the quantity of parts, reducing the structural size, and lowering the demand for layout space in the vehicle.

For example, in the heating retention mode, as shown in FIG. 1, the thermal management system 100 for the vehicle further includes a heat pump plate type heat exchanger 22.

As shown in FIG. 1, a first end of the heat pump plate type heat exchanger 22 (a right end of the heat pump plate type heat exchanger 22 shown in FIG. 1) is connected to the air inlet 12. As shown in FIG. 6, in the heating retention mode, the second end of the first refrigerant branch 45 communicates with the air outlet 11, and the first end of the first refrigerant branch 45 communicates with a second end of the heat pump plate type heat exchanger 22 (a left end of the heat pump plate type heat exchanger 22 shown in FIG. 1) via the on-off valve 52.

Therefore, the first refrigerant branch 45 can be integrated into the original thermal management system 100 of the vehicle 1000, so that the storage box 200 can be heated directly by using the original thermal management system 100, and there is no need to separately provide the temperature regulation structure, such as the compressor 1, for the storage box 200, thereby reducing the quantity of parts, reducing the structural size, and lowering the demand for layout space of the vehicle. In addition, the energy storage member 41 can recover and store heat of the first refrigerant branch 45, so that when the compressor 1 is not operating, the energy stored in the energy storage member 41 can be used to implement temperature retention of the storage box 200, thereby reducing the energy consumption of the vehicle and improving the driving range of the vehicle.

For example, the heat pump plate type heat exchanger 22 may be configured to exchange heat with a motor and electric control unit 91. In this case, in the heating retention mode, the second end of the first refrigerant branch 45 communicates with the air outlet 11, and the first end of the first refrigerant branch 45 communicates with the second end of the heat pump plate type heat exchanger 22 (the left end of the heat pump plate type heat exchanger 22 shown in FIG. 1) via the on-off valve 52.

Because the first refrigerant branch 45 is located upstream of the heat pump plate type heat exchanger 22, a high-temperature and high-pressure refrigerant can directly flow into the first refrigerant branch 45. In addition, through heat exchange with the energy storage member 41 via the first refrigerant branch 45, the energy storage member 41 can obtain heat of the refrigerant, so that the storage box 200 can be heated by the energy storage member 41.

In addition, the energy storage member 41 can store heat of the first refrigerant branch 45, and is configured to regulate the temperature in the storage box 200 when the compressor 1 is not operating, to implement temperature retention of the food in the storage box 200. That is, the energy storage member 41 can recycle the heat of the first refrigerant branch 45, to reduce energy waste.

In some embodiments, the heat exchange assembly 4 further includes a first heat exchanger 42, and the first heat exchanger 42 is connected to the first refrigerant branch 45 in series.

The first heat exchanger 42 may be configured as an evaporator. Therefore, through the arrangement of the first refrigerant branch 45 connected to the first heat exchanger 42 in series, when the refrigerant flows through the first refrigerant branch 45, heat exchange between the air in the storage box 200 and the refrigerant can be implemented via the first heat exchanger 42, thereby regulating the temperature of the storage box 200.

In some embodiments, the first refrigerant branch 45 passes through the energy storage member 41.

Therefore, through the arrangement of the first refrigerant branch 45 passing through the energy storage member 41, the first refrigerant branch 45 can be integrated into the energy storage member 41, to reduce the design of an external pipeline, which is beneficial for improving an integrated design, and reducing a volume, and is convenient to use the energy storage member 41 to provide a certain protection on the first refrigerant branch 45. Furthermore, contact area between the first refrigerant branch 45 and the energy storage member 41 can be increased, to increase heat exchange area therebetween. This allows for full heat exchange between the two, thereby improving heat exchange efficiency of the two, that is, improving energy storage efficiency of the energy storage member 41.

In some embodiments, the air conditioning subsystem 300 includes a first branch 301 for regulating the temperature in the compartment, and the first branch 301 and the first refrigerant branch 45 are connected in parallel.

Therefore, through the arrangement of the first branch 301 and the first refrigerant branch 45 connected in parallel, the first refrigerant branch 45 can be separately designed. In addition, the arrangement of the first refrigerant branch 45 does not affect other structures of the first branch 301, thereby reducing configuration difficulty of the first refrigerant branch 45. It should be noted that at least a part of the refrigerant circulation circuit 302 is configured as the first branch 301.

In some embodiments, as shown in FIG. 1, the first branch 301 is connected to a second heat exchanger 30 in series, and the second heat exchanger 30 is configured to adjust the temperature in the compartment.

Thus, the second heat exchanger is connected to the first branch 301 in series, to regulate the temperature in the compartment.

For example, as shown in FIG. 1, there may be two second heat exchangers 30, which respectively are a first indoor heat exchanger 31 and a second indoor heat exchanger 32. The first indoor heat exchanger 31 and the second indoor heat exchanger 32 may be disposed in parallel, where the first indoor heat exchanger 31 and the second indoor heat exchanger 32 may be respectively configured to refrigerate and heat the vehicle 1000. In this way, the second heat exchanger 30 is provided to regulate the temperature in the compartment.

In some embodiments, the air conditioning subsystem 300 includes a first branch 301 for regulating the temperature in the compartment, and the first branch 301 and the first refrigerant branch 45 are connected in series.

Therefore, the first refrigerant branch 45 can always communicate with the first branch 301, so that on/off of the first refrigerant branch 45 does not need to be separately controlled. This enables the first refrigerant branch 45 and the first branch 301 to share a control element, thereby improving an integration degree, reducing the quantity of parts and reducing costs. It should be noted that at least a part of the refrigerant circulation circuit 302 is configured as the first branch 301.

In some embodiments, the thermal management system 100 further includes an on-off valve 52 that controls the on/off of the first refrigerant branch 45.

Therefore, the on-off valve 52 is provided to respectively control an on/off state of the first refrigerant branch 45. For example, when the first refrigerant branch 45 needs to be used, the on-off valve 52 is controlled to open the first refrigerant branch 45, so as to control the temperature of the storage box 200. Alternatively, when the storage box 200 does not need to be used, that is, the first refrigerant branch 45 does not need to be used, the on-off valve 52 is controlled to close the first refrigerant branch 45, so as to reduce energy waste and prevent the energy storage member 41 from continuously absorbing energy, thereby prolonging the service life of the energy storage member 41.

The on-off valve 52 may be configured as a throttling element, and on/off of the first refrigerant branch 45 can be controlled by controlling an opening degree of the throttling element. Alternatively, the on-off valve 52 may be configured as a solenoid valve or the like, which is not limited herein.

In some embodiments, as shown in FIG. 1, the thermal management system 100 of the vehicle further includes a first control valve 61 and a second control valve 62. The first control valve 61 is respectively connected to the air outlet 11 and the first end of the first condenser 21, and the second control valve 62 is respectively connected to the air outlet 11 and the second end of the first refrigerant branch 45.

Therefore, through the arrangement of the first control valve 61 between the air outlet 11 and the first end of the first condenser 21, and the arrangement of the second control valve 62 between the air outlet 11 and the second end of the first refrigerant branch 45, the refrigeration retention mode can be implemented by opening the first control valve 61, or the heating retention mode can be implemented by opening the second control valve 62.

In other words, through the arrangement of the first control valve 61 and the second control valve 62, the thermal management system 100 can be switched between the refrigeration retention mode and the heating retention mode, thereby avoiding a problem of interference of flow paths in the two modes.

In some embodiments, as shown in FIG. 1, the thermal management system 100 for the vehicle further includes a second indoor heat exchanger 32. The thermal management system 100 includes a heating mode. In the heating mode, a first end of the second indoor heat exchanger 32 (a left end of the second indoor heat exchanger 32 shown in FIG. 1) communicates with the air outlet 11, and a second end of the second indoor heat exchanger 32 (a right end of the second indoor heat exchanger 32 shown in FIG. 1) communicates with the second end of the heat pump plate type heat exchanger 22 via the third throttle element 53.

Therefore, the compressor 1, the second indoor heat exchanger 32, and the heat pump plate type heat exchanger 22 form a heating circuit, and the second indoor heat exchanger 32 is correspondingly provided with the air PTC thermistor 20. In the heating mode, when the refrigerant flows through the first indoor heat exchanger 31, and the air PTC thermistor 20 can blow heat from the second indoor heat exchanger 32 into the occupant compartment to heat the occupant compartment.

In some embodiments, as shown in FIG. 1, the heat exchange assembly 4 further includes a first heat exchanger 42, and the first heat exchanger 42 is connected to the first refrigerant branch 45 in series.

Therefore, through the arrangement of the first heat exchanger 42, heat exchange is performed between the storage box 200 and the first refrigerant branch 45 via the first heat exchanger 42, and the temperature of the storage box 200 is controlled by using the original thermal management system 100 in the vehicle.

In some embodiments, as shown in FIG. 1, the thermal management system 100 of a vehicle further includes a sterilization module 43 for sterilizing the heat exchange assembly 4.

Therefore, through the arrangement of the sterilization module 43, the heat exchange assembly 4 can be sterilized, to prevent bacteria growth and mold formation on a surface of the heat exchange assembly 4, thereby avoiding odor issues and ensuring food safety.

For example: to ensure freshness of the food in the storage box 200, the sterilization module 43 is disposed in the storage box 200, so that the sterilization module 43 can simultaneously disinfect and sterilize the storage box 200 and the heat exchange assembly 4.

For example, the sterilization module 43 is configured as an ultraviolet sterilization lamp. The ultraviolet sterilization lamp is located outside the storage box 200, and the ultraviolet sterilization lamp is adapted to irradiate along the air vent 201 toward the interior of the storage box 200 to perform sterilization and disinfection.

It will be noted that the ultraviolet sterilization lamp has a simpler structure, is more environmentally friendly and has better sterilization effect. In this way, while the sterilization effect is ensured, the freshness of the food in the storage box 200 can be ensured. For example, the ultraviolet sterilization lamp is arranged in the storage box 200, so that the sterilization module 43 can simultaneously disinfect and sterilize the storage box 200 and the heat exchange assembly 4.

In some embodiments, the energy storage member 41 is configured as a phase-change material member. In this way, the energy storage member 41 can better absorb or release the energy of the first refrigerant branch 45.

Certainly, in some other embodiments, the energy storage member 41 may alternatively be configured as other types of structures capable of absorbing or releasing energy.

In some embodiments, as shown in FIG. 1, the thermal management system 100 further includes an air-liquid separator 7.

The air-liquid separator 7 is provided with a heating apparatus. The heating apparatus is configured to heat the refrigerant. An outlet of the air-liquid separator 7 is connected to the air inlet 12. An inlet of the air-liquid separator 7 is connected to the other end of the first indoor heat exchanger 31.

Therefore, through the arrangement of the air-liquid separator 7, the liquid refrigerant of the system is prevented from causing a liquid slugging effect on the compressor 1 in winter. The outlet of the air-liquid separator 7 is connected to the air inlet 12, that is, the air-liquid separator 7 is disposed upstream of the air inlet 12 of the compressor 1. In this way, through the arrangement of the air-liquid separator 7 with the heating apparatus upstream of the air inlet 12 of the compressor 1, the refrigerant can be heated, so that the liquid refrigerant that is not gasified is gasified by directly heating or coaxial tube thermal radiation, thereby preventing the compressor 1 from experiencing liquid slugging from the liquid refrigerant.

The heating apparatus may be a heating wire or a coaxial tube thermal radiation structure, which is not limited herein.

In some embodiments, as shown in FIG. 1, the thermal management system 100 of a vehicle further includes a first heat exchange member 8 for exchanging heat with a battery pack. The first heat exchange member 8 is connected to the heat exchange assembly 4 in parallel.

Therefore, through the arrangement of the first heat exchange member 8, a battery thermal management module 8a is integrated into the thermal management system 100, so that a part of components in the thermal management system 100 can be utilized to implement thermal management of a battery. In addition, because the first heat exchange member 8 and the heat exchange assembly 4 are connected in parallel, arrangement difficulty of the first heat exchange member 8 can be reduced, which is beneficial to reducing interaction between the battery thermal management module 8a and the heat exchange assembly 4.

For example, the first heat exchange member 8 may be configured as a battery pack cold plate. The battery pack cold plate is integrated with the battery pack and the battery pack cold plate is configured to heat or cool the battery pack. In this way, the battery pack cold plate can be integrated into the thermal management system 100, so that the battery pack cold plate can utilize components such as the compressor 1 in the thermal management system 100 to exchange heat with the battery.

In some embodiments, as shown in FIG. 1, there are a plurality of first heat exchange members 8, and the plurality of first heat exchange members 8 are connected in parallel.

Therefore, through the arrangement of the plurality of first heat exchange members 8 connected in parallel, arrangement difficulty of the plurality of first heat exchange members 8 can be reduced, which is beneficial to implementing heat exchange of a plurality of batteries.

The following describes a thermal management system 100 according to an embodiment of this application with reference to FIG. 1 to FIG. 10.

As shown in FIG. 1, the thermal management system 100 includes a compressor 1, a first condenser 21, a heat pump plate type heat exchanger 22, a first indoor heat exchanger 31, a second indoor heat exchanger 32, a high-pressure sensor 13, a temperature sensor 14, a solenoid valve 15, a pressure and temperature sensor 16, a check valve 17, an electronic expansion valve 18, a liquid storage and drying tank 19, an air PTC thermistor 20, a first throttle element 51, an on-off valve 52, a third throttle element 53, a first control valve 61, a second control valve 62, an air-liquid separator 7, a heat exchange assembly 4, a battery thermal management module 8a, and a motor and electric control coolant circuit.

As shown in FIG. 1, the heat exchange assembly 4, the battery thermal management module 8a, and the motor and electric control coolant circuit are all integrated into the thermal management system 100. The heat exchange assembly 4 is connected in series between the first condenser 21 and the compressor 1.

As shown in FIG. 2, the heat exchange assembly 4 includes: an energy storage member 41, a first heat exchanger 42, a fan 44, and a sterilization module 43.

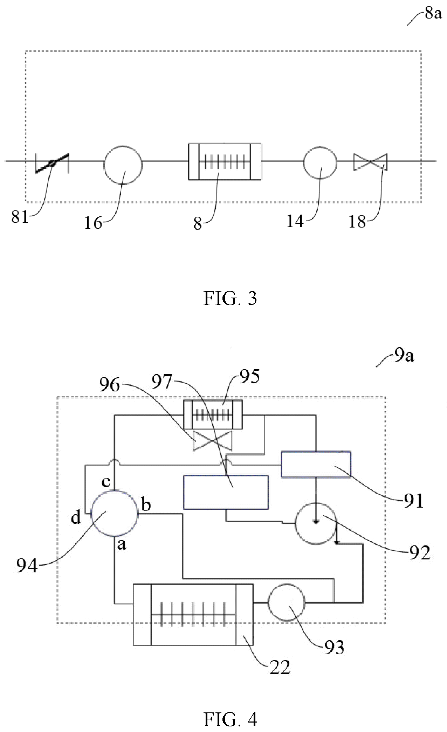

The battery thermal management module 8a and the heat exchange assembly 4 are connected in parallel, and as shown in FIG. 3, the battery thermal management module 8a includes: a first heat exchange member 8, a large-diameter throttle valve 81, a temperature sensor 14, a pressure and temperature sensor 16, and an electronic expansion valve 18. When a plurality of battery pack cold plates are connected in parallel, a plurality of battery thermal management modules 8a may be disposed in parallel.

The motor and electric control coolant circuit is connected to the heat pump plate type heat exchanger 22 in parallel, and as shown in FIG. 4, the motor and electric control coolant circuit includes: a motor and electric control unit 91, a water pump 92, a water temperature sensor 93, a four-way water valve 94, a valve port a, a valve port b, a valve port c, a valve port d, a radiator 95, an electronic fan 96, and a coolant tank 97.

The motor and electric control coolant circuit has at least five operating conditions:
Operating condition 1 of the coolant circuit: the coolant flows through the motor and electric control unit 91 → the water pump 92 → the water temperature sensor 93 → the heat pump plate type heat exchanger 22 → the valve port a of the four-way water valve 94 → the valve port d of the four-way water valve 94 → the motor and electric control unit 91. A principle of this circuit is that in a certain low-temperature environment, when the refrigerant side has a residual heat utilization demand for the coolant circuit and the motor and electric control unit 91 does not need the radiator 95 to dissipate heat, and the high-temperature coolant flows through the heat pump plate type heat exchanger 22 and exchanges heat with the low-temperature refrigerant that flows through the heat pump plate type heat exchanger 22. In this way, through a heat exchange effect of the heat pump plate type heat exchanger 22, heat on the coolant side is exchanged to the refrigerant side, and waste heat generated by the motor and electric control unit 91 is effectively utilized, thereby reducing low-temperature energy consumption and improving the driving range.
Operating condition 2 of the coolant circuit: the coolant flows through the motor and electric control unit 91 → the water pump 92 → the water temperature sensor 93 → the heat pump plate type heat exchanger 22 → the valve port a of the four-way water valve 94 → the valve port c of the four-way water valve 94 → the radiator 95 → the motor and electric control unit 91. Simultaneously, the coolant also flows through the motor and electric control unit 91 → the water pump 92 → the water temperature sensor 93 → the heat pump plate type heat exchanger 22 → the valve port a of the four-way water valve 94 → the valve port d of the four-way water valve 94 → the motor and electric control unit 91. A principle of this circuit is that in a certain low-temperature environment, when the refrigerant side has a residual heat utilization demand for the coolant circuit and waste heat generated by the motor and electric control unit 91 needs to be dissipated via the radiator 95, and the demand for utilizing residual heat is higher than the heat dissipation demand, the coolant enters through the valve port a of the four-way water valve 94, exits from the valve port d of the four-way water valve 94, and the four-way valve c, and finally flows through a circulation circuit to exchange heat with the low-temperature refrigerant that flows through the heat pump plate type heat exchanger 22. In this way, through a heat exchange effect of the heat pump plate type heat exchanger 22, heat on the coolant side is exchanged to the refrigerant side, and the waste heat is effectively utilized, thereby reducing low-temperature energy consumption and meeting the heat dissipation demand of the motor and electric control unit 91, and excess heat is dissipated to an external environment via the radiator 95.
Operating condition 3 of the coolant circuit: the coolant flows through the motor and electric control unit 91 → the water pump 92 → the water temperature sensor 93 → the heat pump plate type heat exchanger 22 → the valve port a of the four-way water valve 94 → the valve port c of the four-way water valve 94 → the radiator 95 → the motor and electric control unit 91.

A principle of this circuit is that in a certain low-temperature environment, the refrigerant side has a residual heat utilization demand for the coolant circuit, and the motor and electric control unit 91 has a heat dissipation demand, and the heat dissipation demand for waste heat generated by the motor and electric control unit 91 is higher than the residual heat utilization demand. Through the heat exchange effect of the heat pump plate type heat exchanger 22, heat on the coolant side is exchanged to the refrigerant side, and the waste heat is effectively utilized, thereby reducing low-temperature energy consumption. Simultaneously, the heat dissipation demand of the motor and electric control unit 91 is met, and excess heat is dissipated to an outside environment via the radiator 95.

Operating condition 4 of the coolant circuit: the coolant flows through the motor and electric control unit 91 → the water pump 92 → the water temperature sensor 93 → the heat pump plate type heat exchanger 22 → the valve port a of the four-way water valve 94 → the valve port c of the four-way water valve 94 → the radiator 95 → the motor and electric control unit 91.

A principle of this circuit is that in a certain low-temperature environment, the refrigerant side has a residual heat utilization demand for the coolant circuit, while heat generated by the motor and electric control unit 91 is insufficient, that is, a temperature of the coolant in the motor and electric control unit 91 is lower than an external ambient temperature, the coolant needs to absorb heat in an external environment of the vehicle via the radiator 95, and then passes through a circulation circuit to exchange heat with the low-temperature refrigerant that flows via the heat pump plate type heat exchanger 22. In this way, through a heat exchange effect of the heat pump plate type heat exchanger 22, heat on the coolant side is exchanged to the refrigerant side, heat from the external environment and heat generated by the motor and electric control unit 91 are effectively utilized, thereby reducing low-temperature energy consumption and improving the driving range.

Operating condition 5 of the coolant circuit: the coolant flows through the motor and electric control unit 91 → the water pump 92 → the valve port b of the four-way water valve 94 → the valve port c of the four-way water valve 94 → the radiator 95 → the motor and electric control unit 91.

A principle of this circuit is that in a certain high-temperature environment, the refrigerant side has no residual waste utilization demand for the coolant circuit. In this case, regardless of whether or how much heat is dissipated by the motor and electric control unit 91, the four-way water valve 94 bypasses the heat pump plate type heat exchanger 22. The coolant does not flow through the heat pump plate type heat exchanger 22 but directly flows through the radiator 95 to rapidly dissipate heat from the motor and electric control unit 91, and the heat is dissipated to an external environment via the radiator 95.

The thermal management system 100 in this embodiment can have a plurality of modes, including: a refrigeration retention mode (only the storage box 200 is refrigerated and retained), a heating retention mode (only the storage box 200 is heated and retained), an occupant compartment-only refrigeration mode, an occupant compartment-only heating mode, a battery-only cooling mode, a battery-only heating mode, and other modes.

As shown in FIG. 5, the refrigeration retention mode (only the storage box 200 is refrigerated and retained): refrigerant circuit: the refrigerant flows through the compressor 1 → the pressure sensor → the temperature sensor 14 → the solenoid valve 15 → the first condenser 21 → the liquid storage and drying tank 19 → the check valve 17 → the electronic expansion valve 18 → the temperature sensor 14 → the energy storage member 41 → the first heat exchanger 42 → the pressure and temperature sensor 16 → the solenoid valve 15 → the check valve 17 → the air-liquid separator 7 → the compressor 1. In the circulation circuit, high-temperature and high-pressure gaseous refrigerant generated by the compressor 1 exchanges heat with cold air outside the vehicle via the first condenser 21, to become a medium-temperature and medium-pressure liquid refrigerant. After the medium-temperature and medium-pressure refrigerant is expanded via the electronic expansion valve 18, the refrigerant becomes a low-temperature and low-pressure liquid refrigerant. The low-temperature liquid refrigerant flows through the energy storage member 41, and cold is absorbed by the energy storage member 41. The refrigerant then flows through the first heat exchanger 42, and exchanges heat with hot air in the heat exchange assembly 4, thereby refrigerating the heat exchange assembly 4. After the energy storage member 41 is full of cold, the compressor 1 is not operating. The cold is released by the energy storage member 41, the fan 44 is turned on, and the air flows, thereby implementing the refrigeration retention performance of the heat exchange assembly 4.

As shown in FIG. 6, the heating retention mode (only the storage box 200 is heated and retained): refrigerant circuit: the refrigerant flows through the compressor 1 → the pressure sensor → the temperature sensor 14 → the solenoid valve 15 → the first heat exchanger 42 → the energy storage member 41 → the temperature sensor 14 → the electronic expansion valve 18 → the check valve 17 → the heat pump plate type heat exchanger 22 → the solenoid valve 15 → the air-liquid separator 7 → the compressor 1.

In the circulation circuit, high-temperature and high-pressure gaseous refrigerant generated by the compressor 1 flows through the first heat exchanger 42, and exchanges heat with cold air in the storage box 200, to heat the storage box 200, and then flows through the energy storage member 41. The energy storage member 41 absorbs excessive heat. After the energy storage member 41 completes energy storage, the compressor 1 may stop operating, and the energy storage member 41 supplies a heat source to perform temperature retention.

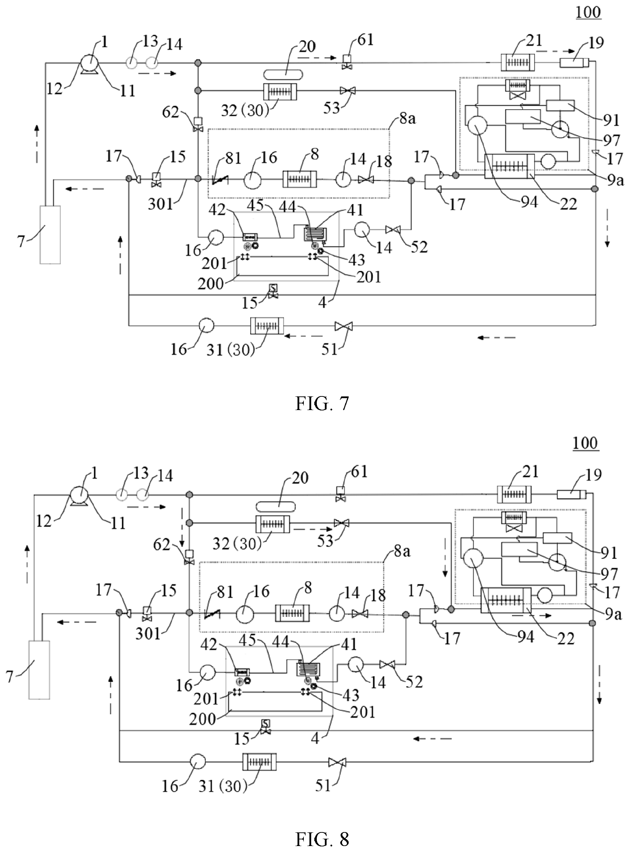

As shown in FIG. 7, the occupant compartment-only refrigeration mode: refrigerant circuit: the refrigerant flows through the compressor 1 → the pressure sensor → the temperature sensor 14 → the solenoid valve 15 → the first condenser 21 → the liquid storage and drying tank 19 → the check valve 17 → the electronic expansion valve 18 → the first indoor heat exchanger 31 → the pressure and temperature sensor 16 → the air-liquid separator 7 → the compressor 1.

In the circulation circuit, high-temperature and high-pressure gaseous refrigerant generated by the compressor 1 exchanges heat with cold air outside the vehicle via the first condenser 21, to become a medium-temperature and medium-pressure liquid refrigerant. After the medium-temperature and medium-pressure refrigerant is expanded via the electronic expansion valve 18, the refrigerant becomes a low-temperature and low-pressure liquid refrigerant. The low-temperature liquid refrigerant flows through the first indoor heat exchanger 31, and exchanges heats with hot air in the occupant compartment, thereby refrigerating the occupant compartment.

As shown in FIG. 8, the occupant compartment-only heating mode: refrigerant circuit: the refrigerant flows through the compressor 1 → the pressure sensor → the temperature sensor 14 → the second indoor heat exchanger 32 (simultaneously, the air PTC thermistor 20 is turned on if needed) → the electronic expansion valve 18 → the heat pump plate type heat exchanger 22 → the solenoid valve 15 → the air-liquid separator 7 → the compressor 1.

In the circulation circuit, a high-temperature and high-pressure gaseous refrigerant generated by the compressor 1 flows through the storage box 200 and performs heat exchange with cold air in the storage box to heat the storage box 200. The high-temperature gaseous refrigerant passes through the second indoor heat exchanger 32, and exchanges heat with cold air in the occupant compartment, thereby heating the occupant compartment.

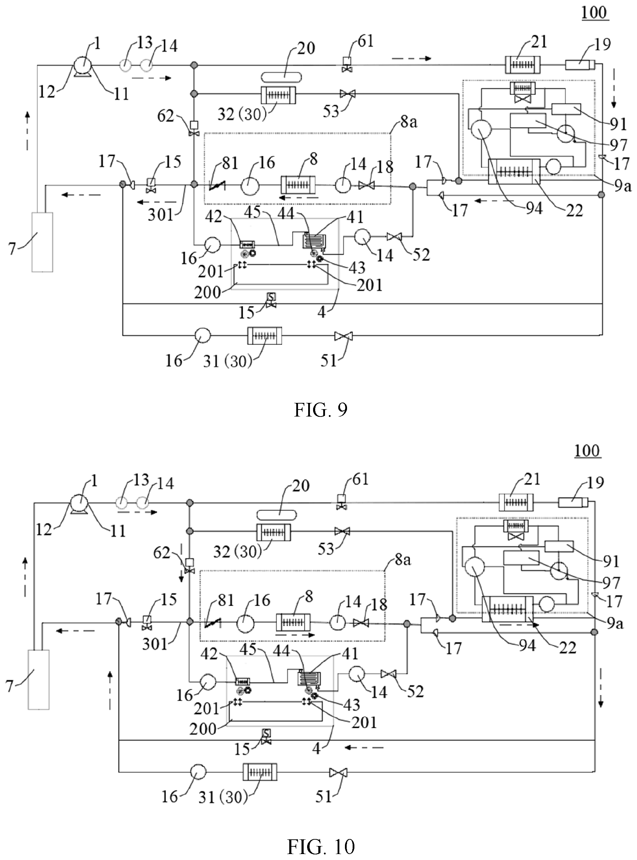

As shown in FIG. 9, the battery-only cooling mode: refrigerant circuit: the refrigerant flows through the compressor 1 → the pressure sensor → the temperature sensor 14 → the solenoid valve 15 → the first condenser 21 → the liquid storage and drying tank 19 → the check valve 17 → the electronic expansion valve 18 → the temperature sensor 14 → the first heat exchange member 8 → the pressure and temperature sensor 16 → the large-diameter throttle valve 8 → the solenoid valve 15 → the check valve 17 → the air-liquid separator 7 → the compressor 1.

As shown in FIG. 10, the battery-only heating mode: refrigerant circuit: the refrigerant flows through the compressor 1 → the pressure sensor → the temperature sensor 14 → the solenoid valve 15 → the large-diameter throttle valve 8 → the pressure and temperature sensor 16 → the first heat exchange member 8 → the temperature sensor 14 → the electronic expansion valve 18 → the check valve 17 → the heat pump plate type heat exchanger 22 → the solenoid valve 15 → the air-liquid separator 7 → the compressor 1.

In the circulation circuit, a high-temperature and high-pressure gaseous refrigerant generated by the compressor 1 flows through the first heat exchange member 8, and the refrigerant exchanges heat with a low-temperature battery pack via a battery pack cold plate, thereby heating the battery pack.

Other modes: (1) any two or more of the six foregoing modes may be used in combination. (2) the refrigeration retention mode (only the storage box 200 is refrigerated and retained), the occupant compartment-only refrigeration mode, the battery-only cooling mode are combined with the foregoing operating condition 5 of the coolant circuit for use.

(3) the heating retention mode (only the storage box 200 is heated and retained), the occupant compartment-only heating mode and the battery heating mode are combined with the foregoing operating condition 1 of the coolant circuit, operating condition 2 of the coolant circuit, operating condition 3 of the coolant circuit, and operating condition 4 of the coolant circuit for use.

It should be noted that: In all the foregoing embodiments, in the circuit through which the refrigerant flows, all valves are opened. In the circuit through which the refrigerant does not flow, the valves in the circuit are closed.

Therefore, compared with the related art, the thermal management system 100 in this embodiment has the advantages as follows:
1, in the related art, both the refrigeration system and the heating system of the heat exchange assembly 4 are independent systems. In this embodiment, the refrigeration system and the heating system of the heat exchange assembly 4 (the storage box 200) share the thermal management system 100 of the vehicle, and the heat pump compressor 1 of the vehicle is used to directly refrigerate or heat the heat exchange assembly 4.
2, the heat exchange assembly 4 is integrated into the thermal management system 100, so that costs of the vehicle can be reduced, space of the vehicle can be reduced, and problems such as NVH and vibration can be reduced. In addition, in the low-temperature environment, the heat pump system can be used for heating, which can effectively save energy.
3, in the related art, only a foamed layer is used to perform temperature retention after refrigeration or heating, and a temperature retention effect is relatively poor. However, in this embodiment, the energy storage member 41 is added to the heat exchange assembly 4. When the compressor 1 is not operating, the energy storage member 41 can perform temperature retention on the storage box 200 for a long time.
4, in the related art, only the foamed layer is used to perform temperature retention after refrigeration or heating, and a temperature retention effect is relatively poor. However, in this patent technology, the energy storage member 41 is added to the heat exchange assembly 4. When the compressor 1 is operating, energy storage begins, and after the energy is fully charged, the compressor 1 can be deactivated, thus allowing for long-term temperature retention without being affected by the compressor 1 that is deactivated.
5, in the related art, because an outlet pressure of the heat exchange assembly 4 may be extremely low, for example, as low as below 0.18 MPa, to prevent damage to the compressor 1 due to liquid slugging, the air-liquid separator 7 with the heating apparatus is disposed at the air inlet of the compressor 1, and has a function of gasifying the liquid refrigerant that is not gasified by direct heating or coaxial tube heat radiation, thereby preventing the compressor 1 from experiencing liquid slugging from the liquid refrigerant.
6, in the related art, because a temperature regulation system includes the energy storage member 41 and the first heat exchanger, to prevent bacteria growth and mold formation on surfaces of the two, thereby avoiding odor issues and ensuring food safety, and to ensure freshness of the food stored in the storage box 200, an ultraviolet sterilization lamp is disposed in the heat exchange assembly 4 to simultaneously disinfect and sterilize the storage box 200, the first heat exchanger 42, and the energy storage member 41.

Certainly, the foregoing description of a partial structure of the thermal management system 100 is merely an example of a preferred embodiment and does not constitute a limitation thereto.

This application further discloses a vehicle 1000.

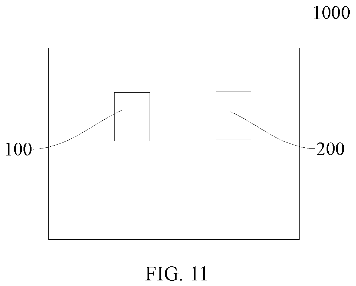

As shown in FIG. 11, the vehicle 1000 according to this application includes the thermal management system 100 according to any one of the foregoing embodiments.

In the vehicle 1000 according to the embodiment of this application, through the arrangement of the energy storage member 41 in the thermal management system 100, and communication between the first refrigerant branch 45 and the first branch 301, the first refrigerant branch 45 is integrated into the original thermal management system 100 of the vehicle 1000, so that the storage box 200 is refrigerated directly by using the original thermal management system 100, and there is no need to separately provide the temperature regulation structure, such as the compressor 1, for the storage box 200, thereby reducing the quantity of parts, reducing the structural size, and lowering the demand for layout space of the vehicle. In addition, the energy storage member 41 can recover and store energy of the first refrigerant branch 45, so that when the compressor 1 is not operating, the energy stored in the energy storage member 41 can be used to implement temperature retention of the storage box 200, which is beneficial to reducing the energy consumption of the vehicle and improving the driving range of the vehicle.

In the descriptions of this application, it will be understood that orientations or positional relationships indicated by the terms "center", "longitudinal", "transverse", "length", "width", "thickness" "upper", "lower", "front", "rear", "left", "right", "vertical", "horizontal", "top", "bottom", "inner", "outer", "clockwise", "anticlockwise", "axial", "radial", "circumferential", and the like are orientations or positional relationships as shown in the drawings, and are only for the purpose of facilitating and simplifying the descriptions of the embodiments of this application instead of indicating or implying that apparatuses or elements indicated must have particular orientations, and be constructed and operated in the particular orientations, so that these terms are not construed as limiting the embodiments of this application.

In addition, the terms "first" and "second" mentioned below are merely intended for a purpose of description, and will not be understood as an indication or implication of relative importance or implicit indication of a quantity of indicated technical features. Therefore, a feature limited by "first" and "second" may explicitly or implicitly include one or more features. In the descriptions of this application, unless otherwise expressly limited, "a plurality of" means two or more.

In this application, unless otherwise expressly specified and limited, the terms "mount", "join", "connect", "fix", and the like will be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the foregoing terms in this application can be understood according to specific situations.

In this application, the first feature being "above" or "below" the second feature may mean that the first feature and the second feature are in direct contact, or the first feature and second feature are in indirect contact via an intermediate medium, unless otherwise expressly specified and limited. Furthermore, the first feature being "over", "above", or "on" the second feature may mean that the first feature is directly above or diagonally above the second feature, or simply means that the first feature has a higher horizontal height than the second feature. The first feature being "beneath", "below", or "under" the second feature may mean that the first feature is directly below or diagonally below the second feature, or simply means that the first feature has a smaller horizontal height than the second feature.

In the description of this specification, descriptions referring to the terms "one embodiment", "some embodiments", "examples", "specific examples" or "some examples" mean that specific features, structures, materials or characteristics described in connection with this embodiment or example are included in at least one embodiment or example of this application. In this specification, the schematic representations of the foregoing terms are not necessarily referring to the same embodiment or example. Moreover, specific features, structures, materials or characteristics described may be combined in any one or more embodiments or examples in a suitable manner. In addition, those skilled in the art may combine and associate different embodiments or examples and features of different embodiments or examples described in this specification without mutual contradiction.

Although embodiments of this application have been shown and described above, it is understood that the foregoing embodiments are exemplary and are not to be construed as limitations on this application. Those of ordinary skill in the art may change, modify, replace and vary the foregoing embodiments within the scope of this application.

## Claims

1. A thermal management system (100) for a vehicle, wherein the vehicle (1000) is provided with a storage box (200), and the thermal management system (100) comprises:
an air conditioning subsystem (300), the air conditioning subsystem (300) comprises a compressor (1); and
a heat exchange assembly (4), the heat exchange assembly (4) is adapted to regulate a temperature in the storage box (200), the heat exchange assembly (4) comprises an energy storage member (41) and a first refrigerant branch (45), the first refrigerant branch (45) supplies energy to the energy storage member (41), the energy storage member (41) is configured to store and release energy and is adapted to regulate the temperature in the storage box (200), the first refrigerant branch (45) is respectively connected to an air inlet (12) and an air outlet (11) of the compressor (1).

2. The thermal management system (100) of a vehicle according to claim 1, wherein the first refrigerant branch (45) regulates the temperature in the storage box (200), or the energy storage member (41) releases energy to regulate the temperature in the storage box (200).

3. The thermal management system (100) of a vehicle according to any one of claims 1 and 2, wherein the heat exchange assembly (4) further comprises a first heat exchanger (42), and the first heat exchanger (42) is connected to the first refrigerant branch (45) in series.

4. The thermal management system (100) of a vehicle according to any one of claims 1 to 3, wherein the first refrigerant branch (45) passes through the energy storage member (41).

5. The thermal management system (100) of a vehicle according to any one of claims 1 to 4, wherein the air conditioning subsystem (300) comprises a first branch (301) for regulating a temperature in a compartment, and the first branch (301) and the first refrigerant branch (45) are connected in parallel.

6. The thermal management system (100) of a vehicle according to any one of claims 1 to 4, wherein the air conditioning subsystem (300) comprises a first branch (301) for regulating a temperature in a compartment, and the first branch (301) and the first refrigerant branch (45) are connected in series.

7. The thermal management system (100) of a vehicle according to any one of claims 1 to 6, wherein the thermal management system further comprises a sterilization module (43) for sterilizing the heat exchange assembly (4).

8. The thermal management system (100) of a vehicle according to any one of claims 1 to 7, wherein the energy storage member (41) is configured as a phase-change material member.

9. The thermal management system (100) of a vehicle according to any one of claims 1 to 8, further comprising a first heat exchange member (8) for exchanging heat with a battery pack, and the first heat exchange member (8) is connected to the heat exchange assembly (4) in parallel.

10. The thermal management system (100) of a vehicle according to claim 9, wherein there are a plurality of first heat exchange members (8), and the plurality of first heat exchange members (8) are connected in parallel.

11. A vehicle (1000), wherein the vehicle comprises the thermal management system (100) according to any one of claims 1 to 10.
